# EUROPÄISCHE PATENTSCHRIFT

(11) **EP 0 317 753 B1**
(45) Veröffentlichungstag und Bekanntmachung des Hinweises auf die Patenterteilung: **08.12.1993**
(21) Anmeldenummer: 88117076.5
(22) Anmeldetag: 14.10.1988
(51) Int. Cl.: A47J 31/54

(54) **Durchlauferhitzer**
Instant water heater
Chauffe-eau instantané

(30) Priorität: 27.11.1987 DE 3740292
(43) Veröffentlichungstag der Anmeldung: 31.05.1989
(73) Patentinhaber: Braun Aktiengesellschaft, Frankfurt am Main (DE)
(72) Erfinder: Schiebelhuth, Heinz, D-6000 Frankfurt/Main 50 (DE); Wonka, Boris, D-6078 Neu-Isenburg (DE)

(56) Entgegenhaltungen:
- EP-A- 0 202 939
- DE-A- 2 552 625
- DE-U- 8 316 631
- US-A- 3 678 246

## Beschreibung

Die Erfindung betrifft einen elektrisch beheizten Durchlauferhitzer für Haushaltsgeräte zur Herstellung von Filterkaffee oder anderen heißen Aufgußgetränken gemäß dem Oberbegriff des Anspruchs 1. Derartige Durchlauferhitzer sind beispielsweise aus der EP-0 106 914 Cl und aus dem DE-U-83 16 631 bekannt. Der dort beschriebene Durchlauferhitzer besteht aus einem hufeisenförmig ausgebildeten, elektrischen Rohrheizkörper, der in gutem Wärmekontakt mit einem ihn umgebenden Wasserrohr steht. Zur Zubereitung von heißen Getränken wird in einem Vorratsbehälter des Haushaltsgerätes kaltes Wasser eingebracht, welches dann dem Durchlauferhitzer zugeführt, dort aufgeheizt und über ein Steigrohr einer insbesondere Kaffee oder Tee enthaltenden Aufbrüheinrichtung zugeführt wird und von dort in einen Auffangbehälter geleitet wird, der auf einer auf einem Sockel des Haushaltsgerätes angebrachten Warmhalteplatte steht, wobei die Warmhalteplatte ebenfalls vom Rohrheizkörper beheizt wird. Der Wassertransport vom Vorratsbehälter über das Steigrohr zur Aufbrüheinrichtung erfolgt dabei schubweise durch den im Durchlauferhitzer mittels des Rohrheizkörpers erzeugten Dampfdrucks, der sich in Richtung des Vorratsbehälters aufgrund eines entsprechend angebrachten Rückschlagventils nicht auswirken kann.

Um den Rohrheizkörper nach dem Durchtritt des gesamten Wasservorrats vor Überhitzung zu schützen und gleichzeitig die Temperatur der Warmhalteplatte innerhalb eines vorbestimmbaren Temperaturbereiches zu halten, kann die Stromzufuhr für den Rohrheizkörper über einen im allgemeinen einen Bimetallstreifen enthaltenden Temperaturregler ein- und ausgeschaltet werden. Für den Fall, daß der Temperaturregler nicht mehr arbeitet und dabei in der den elektrischen Stromkreis schließenden Position verharrt, kann der elektrische Rohrheizkörper zusätzlich mit einer Temperatursicherung versehen werden, die nach Erreichen ihrer sogenannten Ausschalttemperatur die Stromzufuhr für den Rohrheizkörper unterbricht (vgl. Schmelzsicherung 13 in DE-U-83 16 631). So weist beispielsweise die von der Firma Braun AG, Frankfurt, unter dem Modellnamen KF40 verkaufte Kaffeemaschine (vgl. Programmübersicht Herbst 1987) neben einem Temperaturregler auch noch eine Temperatursicherung auf, die eine Ausschalttemperatur von 228° C aufweist.

Derartige, nach einem Schaltvorgang nicht mehr weiter verwendbare Temperatursicherungen, die beispielsweise von der Firma Elektrotechnische Vertriebs-GmbH, 6228 Eltville, hergestellt werden, werden zum einen elektrisch zwischen einer elektrischen Anschlußleitung und einer Anschlußklemme des Rohrheizkörpers geschaltet und zum anderen in thermischen Kontakt mit dem Rohrheizkörper gebracht. Eine Unterbrechung der elektrischen Leitfähigkeit der Temperatursicherung erfolgt dabei nicht durch die mit dem Stromfluß verbundene Eigenerwärmung, sondern alleine durch einen aufgrund von deren Wärmeankopplung an den Rohrheizkörper in die Temperatursicherung einfließenden Wärmestrom.

Ist das Wasserrohr mit Wasser gefüllt und der Rohrheizkörper an die Spannungsversorgung angeschlossen, so reicht der vom Rohrheizkörper in die Temperatursicherung einfließende Wärmestrom nicht aus, um in dieser einen Temperaturwert oberhalb der Ausschalttemperatur zu erzeugen. Die Temperatursicherung bleibt daher leitend, so daß der Rohrheizkörper weiterhin mit der Spannungsversorgung verbunden ist. Für den Fall, daß das gesamte, im Vorratsbehälter enthaltende Wasser der Aufbrüheinrichtung bereits zugeführt wurde und das Wasserrohr demzufolge kein zu erhitzendes Wasser mehr enthält, würde die Temperatur des Rohrheizkörpers und des damit verbundenen Wasserrohrs kontinuierlich mit der Zeit ansteigen und zwar solange, bis die Temperatursicherung ihre Ausschalttemperatur erreicht und den Rohrheizkörper dadurch von der Spannungsversorgung trennt. Zur Verhinderung des Ansprechens der Temperatursicherung dient der bekannte Temperaturregler, der bereits bei einem Temperaturwert unterhalb der Ausschalttemperatur der Temperatursicherung den Stromkreis unterbricht. Dies ist nicht nur deshalb notwendig, um die Temperatursicherung vor einem Durchschmelzen zu bewahren, sondern dient auch zur Temperaturregelung der mit dem Rohrheizkörper zusätzlich noch verbundenen Warmhalteplatte, auf der das Auffanggefäß für das aufgebrühte Getränk steht.

Aufgrund der Existenz des Temperaturreglers hat die Temperatursicherung also nur noch die Aufgabe, bei einem eventuellen Ausfall des Reglers in dessen den Stromkreis schließender Stellung trotzdem noch die Spannungsversorgung des Rohrheizkörpers zu unterbrechen, da dieser ansonsten laufend weiter aufgeheizt würde. Eine derartige, unkontrollierte Erwärmung wäre zuerst mit einem Schmelzen des im allgemeinen aus Kunststoff bestehenden Gehäuses des Haushaltsgerätes verbunden ist und würde schließlich sogar noch zum Schmelzen des Durchlauferhitzers selbst führen, von dessen flüssigen Metallteilen eine ernste Brandgefahr ausgeht. Die Ausschalttemperatur der Thermosicherung wird also so gewählt, daß es weder zu einem Anschmelzen des Kunststoffs des Gehäuses des Haushaltsgerätes und erst recht nicht zu einem Schmelzen des Rohrheizkörpers selbst kommt.

Es hat sich nun gezeigt, daß in einigen wenigen Fällen nicht nur der Temperaturregler ausfällt und dabei in seiner geschlossenen Stellung verharrt, sondern gleichzeitig auch noch ein Kurzschluß im Rohrheizkörper auftritt. Kommt als weitere Voraussetzung noch dazu, daß aufgrund des gewählten Einschubs des Netzsteckers in die Steckdose die Temperatursicherung nicht an dem die Phase im Wechselstromnetz führenden Leiter anliegt, kommt es trotz des thermisch bedingten Durchschmelzens der Temperatursicherung nach wie vor zu einem Stromfluß durch den Rohrheizkörper und damit zu dessen unkontrollierter Aufheizung.

Dies tritt zumindest dann ein, wenn trotz des Kurzschlusses noch ein derartig großer ohmscher Widerstand als Heizkörper wirkt, daß die Netzsicherung die Spannungsversorgung noch nicht unterbricht. Aufgrund der Tatsache, daß Netzsicherungen im Haushalt im allgemeinen einen Strom von mindestens 16 Ampere fließen lassen, ohne daß es zu einer Abschaltung der Spannungsversorgung kommt, und in nicht kurzgeschlossenen Rohrheizkörpern Ströme von etwa bis zu 4 Ampere fließen, ist beispielsweise auch bei einem Kurzschluß des halben Rohrheizkörpers erst mit einem Strom von ca. bis zu 8 Ampere zu rechnen, was zu keinem Ansprechen der Netzsicherung führt. Das Vorhandensein der Netzsicherungen stellt daher in den meisten Fällen eines kurzgeschlossenen Rohrheizkörpers keinen wirksamen Schutz vor dessen unkontrollierter Überhitzung dar.

Aus der EP-A-0 202 939 ist ein sogenannter Tauchsieder mit einem elektrischen Rohrheizkörper bekannt, in dessen beiden elektrischen Anschlußleitungen elektrische Kontakte vorhanden sind, die jeweils von einem Temperaturregler geöffnet bzw. geschlossen werden. Beide Temperaturregler werden ebenfalls über die von einem Bimetallstreifen erfaßte Temperatur gesteuert. Obgleich die beiden Temperaturregler unterschiedliche Schalttemperaturen aufweisen, besteht so lange noch keine Gefahr des Schmelzens des Rohrheizkörpers, als nur eine der beiden Temperaturregler nicht mehr arbeitet und dabei in seiner Schließstellung verharrt. Gegen den Ausfall beider Temperaturregler in ihrer Schließstellung - ein in der Praxis nach längerer Betriebsdauer durchaus möglicher Fall - sind aber keine Vorkehrungen getroffen. Ein solcher Ausfall führt daher zwangsläufig zum Schmelzen des Rohrheizkörpers, was mit einer erheblichen Brandgefahr verbunden ist.

Es war daher Aufgabe der Erfindung, einen Durchlauferhitzer nach dem Oberbegriff des Patentanspruchs 1 anzugeben, der auch bei Ausfall des Temperaturreglers und bei einem gleichzeitig auftretenden Kurzschluß im Rohrheizkörper, unabhängig von der Wahl des Einschubs des Netzsteckers und damit der Phasenlage, immer noch davor geschützt wird, unkontrolliert aufgeheizt zu werden.

Diese Aufgabe wird durch die Merkmale des Anspruchs 1 gelöst, wobei eine Ausführungsform der Erfindung darin besteht (Anspruch 2), daß zwei gleichartige Temperatursicherungen verwendet werden.

Dadurch ergibt sich der Vorteil, daß auch bei Verkettung unglücklicher Umstände ein Schmelzen des Kunststoffgehäuses des Getränkezubereitungsgeräts oder gar der Anordnung aus Durchlauferhitzer und Wasserrohr und die damit verbundene Brandgefahr ausgeschlossen werden kann und damit die Produktsicherheit weiter erhöht wird.

Eine vorteilhafte Ausgestaltung der Erfindung besteht darin (Anspruch 3), daß eine erste Temperatursicherung mit niedrigerer Ausschalttemperatur und diesbezüglich geringen Toleranzen und eine zweite, eine höhere Ausschalttemperatur aufweisende Temperatursicherung verwendet wird, die höhere Toleranzen aufweist und daher wesentlich billiger sein kann. Die zweite Temperatursicherung kann so ausgeführt werden (Anspruch 4), daß der Anschlußdraht zwischen Temperaturregler und Rohrheizkörper unter mechanischer Vorspannung stehend so verlötet wird, daß er sich beim Schmelzen der Lötstelle durch eine am Rohrheizkörper auftretende erhöhte Temperatur von der Anschlußklemme wegbewegt und damit eine Unterbrechung des elektrischen Stromkreises bewirkt. Die zweite Temperatursicherung kann auch so ausgeführt werden (Anspruch 5), daß der elektrische Verbindungsdraht zwischen dem Temperaturregler und der Anschlußklemme des Rohrheizkörpers aus einer Legierung mit niedrigem Schmelzpunkt, beispielsweise Lötzinn, besteht und daß bei einer entsprechenden Temperatur des Rohrheizkörpers der Verbindungsdraht schmilzt und dadurch der Rohrheizkörper von der Spannungsversorgung getrennt wird.

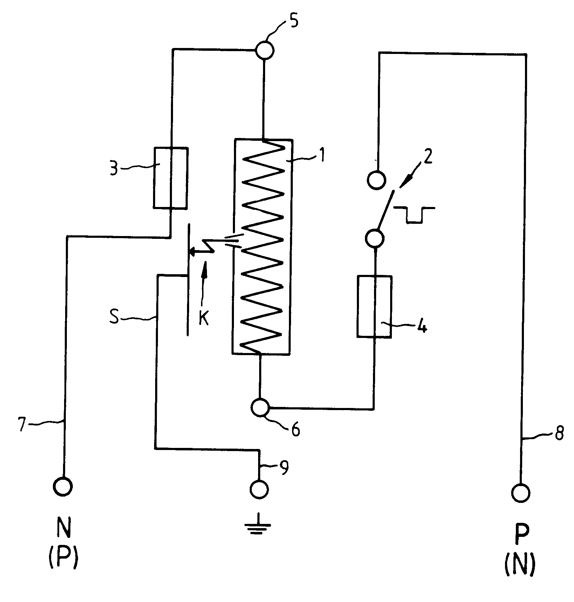

Nachstehend wird die Erfindung anhand eines Ausführungsbeispiels näher erläutert. Dabei zeigt die einzige Figur ein Prinzipschaltbild des erfindungsgemäßen Durchlauferhitzers.

In der Figur ist ein elektrisch betriebener Rohrheizkörper 1 dargestellt, der zusammen mit einem Wasserrohr (nicht dargestellt) einen Durchlauferhitzer für eine gattungsgemäße Kaffeemaschine bildet. Zwischen einer ersten Anschlußklemme 5 des Rohrheizkörpers 1 und einer Anschlußleitung 7, die mit dem Netzstecker der Kaffeemaschine verbunden ist, ist eine erste elektrische Temperatursicherung 3 geschaltet. Zwischen einer zweiten Anschlußklemme 6 des Rohrheizkörpers 1 und einer ebenfalls mit dem Netzstecker verbundenen, weiteren Anschlußleitung 8 ist in Reihe eine zweite Temperatursicherung 4 und ein Temperaturregler 2 geschaltet. Schließlich weist der Rohrheizkörper 1 einen Schutzleiter S auf, der über eine weitere Anschlußleitung 9 bei eingestecktem Netzstecker mit Erde verbunden ist.

Sowohl der Temperaturregler 2 als auch die erste Temperatursicherung 3 und die zweite Temperatursicherung 4 stehen in thermischem Kontakt mit dem Rohrheizkörper 1.

Legt man den Rohrheizkörper 1 durch Einstecken des Netzsteckers an seine Spannungsversorgung, wird der Rohrheizkörper 1 solange aufgeheizt, bis ein im Temperaturregler 2 enthaltenes Bimetallelement als Folge des in den Temperaturregler 2 eintretenden Wärmestroms ausgelenkt wird, so daß der Rohrheizkörper 1 vom Wechselstromnetz getrennt wird. Kühlt nun der Rohrheizkörper 1 aufgrund der Unterbrechung des elektrischen Stromkreises wieder ab und wählt man dabei die Phasenlage so, daß an der Anschlußleitung 8 Phase und an der Anschlußleitung 7 der Null-Leiter anliegt, so wird nach Rückkehr des Bimetallstreifens in seine Ausgangslage die zweite Anschlußklemme 6 des Rohrheizkörpers 1 wieder mit der Phase verbunden, wonach für den Rohrheizkörper 1 ein erneuter Aufheizzyklus beginnen kann.

Für den Fall, daß aus irgendwelchen Gründen der Bimetallstreifen des Temperaturreglers 2 sich in der geschlossenen Stellung verhaken sollte, obgleich der Rohrheizkörper 1 seine Temperatur laufend erhöht, ist die erste Temperatursicherung 3 vorgesehen, die bei Erreichen ihrer Ausschalttemperatur T₁ die elektrische Verbindung zwischen der ersten Anschlußklemme 5 des Rohrheizkörpers 1 und der ersten Anschlußleitung 7 des Netzsteckers dauernd unterbricht. Auf diese Weise wird dafür gesorgt, daß sich der Rohrheizkörper 1 nicht unkontrolliert aufheizen kann, auch wenn der Temperaturregler 2 nicht mehr arbeitet und dabei in der geschlossenen Stellung verharrt.

Tritt nun bei der vorstehend beschriebenen Phasenlage und defektem Temperaturregler 2 zusätzlich noch ein Kurzschluß auf, der dazu führt, daß Heizleiterbereiche des Rohrheizkörpers 1 elektrisch mit dem Schutzleiter S elektrisch leitend verbunden (Kurzschlußsymbol K) sind, so kann die Temperatursicherung 3 ein unkontrolliertes Aufheizen des Rohrheizkörpers 1 nicht mehr verhindern, da der Stromfluß jetzt nicht mehr von der ersten Anschlußklemme 5 über die erste Temperatursicherung 3 zur ersten Anschlußleitung 7 des Netzsteckers verläuft, sondern von der zweiten Anschlußklemme 6 ausgehend nur über einen Teil der Heizleiter des Rohrheizkörpers 1 direkt auf den Schutzleiter S und von dort über die dritte Anschlußleitung 9 des Netzsteckers zur Erde fließt. Dies bedeutet, daß trotz des Ansprechens der ersten Temperatursicherung 3 sich der Rohrheizkörper 1 unkontrolliert weiter aufheizt.

Liegt die in der Figur in Klammern gezeichnete Phasenlage vor, d.h., liegt an der Anschlußleitung 7 die Phase und an der Anschlußleitung 8 der Null-Leiter des Netzsteckers, so besteht eine derartige Möglichkeit zur Überhitzung des Rohrheizkörpers 1 allerdings nicht mehr. Es zeigt sich daher, daß es bei ungünstiger Phasenlage nicht ausreicht, nur eine erste Temperatursicherung 3 anzubringen.

Erfindungsgemäß wird daher zwischen der zweiten Anschlußklemme 6 des Rohrheizkörpers 1 und dem Temperaturregler 2 eine zweite Temperatursicherung 4 geschaltet. Damit ist gewährleistet, daß bei einem Ausfall des Temperaturreglers 2 und dessen Verharren in der geschlossenen Stellung auch bei Eintritt eines Kurzschlusses zwischen Heizleiterbereichen und dem Schutzleiter - unabhängig von der Phasenlage - eine sichere Unterbrechung des Stromkreises für die Beheizung des Rohrheizkörpers 1 erreicht wird.

In einer Ausführungsform der Erfindung kann es sich bei den beiden Temperatursicherungen 3 und 4 um gleichartige Bauteile handeln, die beispielsweise eine Ausschalttemperatur T₁ bzw. T₂ von jeweils 228°C mit einer sehr engen Toleranz von einigen wenigen Grad Celsius hinsichtlich ihrer Ausschalttemperatur aufweisen.

Da nur mit sehr geringer Wahrscheinlichkeit sowohl der Temperaturregler 2 in seiner geschlossenen Stellung verharrt als auch ein Kurzschluß zwischen Heizleiterbereichen und dem Schutzleiter S auftritt und gleichzeitig auch noch die ungünstigere der beiden Phasenlage vorliegt, kann die zweite Temperatursicherung 4 aber auch aus einem preiswerteren Bauelement mit höheren Toleranzen hinsichtlich seiner Ausschalttemperatur T₂ bestehen als die erste Temperatursicherung 3, deren Ausschalttemperatur T₁ nur knapp oberhalb der bei Dauerlast auftretenden Betriebstemperatur liegt. Um eine toleranzbedingte, unerwünschte Ausschaltung der Spannungsversorgung des Rohrheizkörpers 1 zu vermeiden, wird die Ausschalttemperatur T₂ der zweiten Temperatursicherung deutlich höher gelegt, so daß deren Ansprechen tatsächlich nur unter den vorstehend beschriebenen Voraussetzungen für eine Notabschaltung erfolgt.

Grundsätzlich geht man daher bei der Auslegung der Ausschalttemperaturen T₁ und T₂ für die Temperatursicherungen folgendermaßen vor:
Zuerst wird ermittelt, bis zum welchem Temperaturwert sich der Rohrheizkörper 1 im Dauerbetrieb während der Warmhaltephase, d.h. nach dem Durchlaufen des gesamten Wasservorrats durch den Durchlauferhitzer, dauernd erwärmen darf, ohne daß es zu einer Schädigung der Kunststoffteile des Haushaltsgerätes kommt. Dann wird man die Ausschalttemperatur T₁ der ersten Temperatursicherung, die hinsichtlich dieser Größe enge Toleranzen aufweist, knapp oberhalb dieser dauernd zulässigen Temperatur des Rohrheizkörpers wählen. Aufgrund der geringen Toleranzen ist damit gesichert, daß die Unterbrechung der Spannungsversorgung des Rohrheizkörpers 1 nicht bereits in einem noch unkritischen, relativ niederliegendem Temperaturbereich eintritt. Dies ist deshalb wichtig, da nach Ansprechen der Temperatursicherung diese ersetzt werden muß, was mit einigem Aufwand verbunden ist.

Für die billigere und eine größere Toleranz hinsichtlich ihrer Ausschalttemperatur aufweisende Temperatursicherung 4 wird man eine Ausschalttemperatur T₂ wählen, die deutlich über der vorstehend definierten Höchsttemperatur, aber unterhalb einer Temperatur liegt, die zum Schmelzen des Kunststoffgehäuses oder gar zum Schmelzen der Metallteile des Durchlauferhitzers selbst führen kann. Dadurch ist gewährleistet, daß es aufgrund der größeren Toleranzen der Temperatursicherung 4 nicht zu einer ungewollten Abschaltung des Rohrheizkörpers 1 kommt, wenn dieser sich in einem Temperaturbereich befindet, der für die Kaffeemaschine noch ungefährlich ist. Andererseits wird auch erreicht, daß es selbst bei einer Verkettung von unglücklichen Umständen immer noch zu einer Trennung des Rohrheizkörpers 1 von seiner Spannungsversorgung kommt, ohne daß dabei Situationen auftreten, in denen Brandgefahr besteht.

Die Temperatursicherung 4 kann als Schmelzsicherung so ausgeführt werden, daß der vom Temperaturregler 2 zur zweiten Anschlußklemme 6 verlaufende, starr ausgebildete Anschlußdraht mit der Anschlußklemme 6 unter mechanischer Vorspannung stehend verlötet wird. Wählt man als Lot ein Material, welches bei einer bestimmten Temperatur T₂ schmilzt, so bricht die Lötverbindung bei Erreichen dieser Temperatur auf, und der Verbindungsdraht zwischen Temperaturregler 2 und Anschlußklemme 6 bewegt sich unter der Einwirkung der mechanischen Vorspannung von der Anschlußklemme 6 weg und unterbindet dadurch die Stromzuführung für den Rohrheizkörper 1.

Eine andere, ebenfalls als Schmelzsicherung ausgebildete Ausführungsform der Temperatursicherung 4 besteht darin, daß der Verbindungsdraht zwischen dem Temperaturregler 2 und der Anschlußklemme 6 selbst aus einem Material besteht, welches bei einer bestimmten Temperatur T₂ schmilzt. Auch dabei kommt es durch das Schmelzen dieses Materials zu einer Unterbrechung der Stromversorgung für den Rohrheizkörper 1.

## Patentansprüche

1. Durchlauferhitzer für Haushaltsgeräte zur Herstellung von Filterkaffee oder anderen heißen Aufgußgetränken, bestehend aus einer Anordnung aus einem elektrisch beheizten Rohrheizkörper mit einer ersten und zweiten Anschlußklemme und zwei dazugehörigen Anschlußleitungen und einem thermisch angekoppelten Wasserrohr und einer mit dieser Anordnung ebenfalls in Wärmekontakt stehenden Temperatursicherung, die elektrisch zwischen der ersten Anschlußklemme des Rohrheizkörpers und einer Anschlußleitung des Haushaltsgerätes geschaltet ist und die bei Erreichen ihrer Ausschalttemperatur T₁ die Stromversorgung des Rohrheizkörpers unterbricht und einem Temperaturregler, der die Temperatur der Anordnung so steuert, daß die Temperatursicherung unterhalb ihrer Ausschalttemperatur T₁ bleibt,
**dadurch gekennzeichnet**,
daß auch zwischen der zweiten Anschlußklemme (6) des Rohrheizkörpers (1) und der entsprechenden Anschlußleitung (8) eine zweite Temperatursicherung (4) geschaltet ist, deren Ausschalttemperatur T₂ ebenfalls oberhalb des vom Temperaturregler (2) gesteuerten Temperaturbereiches liegt.

2. Durchlauferhitzer nach Anspruch 1,
**dadurch gekennzeichnet**,
daß die beiden Temperatursicherungen gleiche Ausschalttemperaturen T₁ und T₂ und gleiche Toleranzen hinsichtlich der Genauigkeit ihrer Ausschalttemperatur aufweisen.

3. Durchlauferhitzer nach Anspruch 1,
**dadurch gekennzeichnet**,
daß die zweite Temperatursicherung (4) hinsichtlich der Genauigkeit ihrer Ausschalttemperatur T₂ eine größere Toleranz aufweist und daß deren Ausschalttemperatur T₂ oberhalb der Ausschalttemperatur T₁ der ersten Temperatursicherung liegt.

4. Durchlauferhitzer nach Anspruch 3,
**dadurch gekennzeichnet**,
daß die zweite Temperatursicherung (4) als Schmelzsicherung ausgebildet ist, wobei deren Anschlußdraht zwischen dem Temperaturregler (2) und Rohrheizkörper (1) unter mechanischer Vorspannung stehend so verlötet wird, daß beim Schmelzen der Lötstelle durch eine am Rohrheizkörper (1) auftretende erhöhte Temperatur sich der Anschlußdraht von der Kontaktstelle wegbewegt und damit eine Unterbrechung des elektrischen Stromkreises bewirkt wird.

5. Durchlauferhitzer nach Anspruch 3,
**dadurch gekennzeichnet**,
daß die zweite Temperatursicherung (4) als Schmelzsicherung ausgebildet ist, wobei deren Anschlußdraht zwischen Temperaturregler (2) und Rohrheizkörper (1) aus einer Legierung mit niedrigem Schmelzpunkt, beispielsweise Lötzinn, besteht, wodurch bei einer entsprechenden Temperatur des Rohrheizkörpers (1) der Verbindungsdraht schmilzt und dadurch der Rohrheizkörper (1) von der Spannungsversorgung getrennt wird.

## Claims

1. A flow-through heater for domestic appliances for making filter coffee or other hot brews, comprising an arrangement which includes an electrically heated tubular heating means having a first and a second terminal and two associated connecting leads and a water conduit thermally coupled thereto and a thermal protective device which is likewise in thermal contact with this arrangement, the thermal protective device being electrically connected between the first terminal of the tubular heating means and a connecting lead of the domestic appliance and interrupting current supply to the tubular heating means on attaining its circuit-opening temperature T₁, and a thermostat device controlling the temperature of the arrangement such that the thermal protective device remains below its circuit-opening temperature T₁,
**characterized in that** between the second terminal (6) of the tubular heating means (1) and the associated connecting lead (8) a second thermal protective device (4) is connected whose circuit-opening temperature T₂ is likewise above the temperature range controlled by the thermostat device (2).

2. The flow-through heater as claimed in claim 1,
**characterized in that** the two thermal protective devices have identical circuit-opening temperatures T₁ and T₂ and identical tolerances with respect to the accuracy of their circuit-opening temperature.

3. The flow-through heater as claimed in claim 1,
**characterized in that** the second thermal protective device (4) has a wider tolerance with respect to the accuracy of its circuit-opening temperature T₂, and that its circuit-opening temperature T₂ is above the circuit-opening temperature T₁ of the first thermal protective device.

4. The flow-through heater as claimed in claim 3,
**characterized in that** the second thermal protective device (4) is configured as a fuse whose connecting wire between the thermostat device (2) and the tubular heating means (1), in being prestressed mechanically, is soldered such that melting of the soldered joint as a result of a temperature increase occurring at the tubular heating means (1) causes the connecting wire to move away from the contact point, thereby interrupting the electrical circuit.

5. The flow-through heater as claimed in claim 3,
**characterized in that** the second thermal protective device (4) is configured as a fuse whose connecting wire between the thermostat device (2) and the tubular heating means (1) is made of an alloy having a low melting point as, for example, solder tin, said connecting wire melting at a predetermined temperature of the tubular heating means (1), thereby cutting off the tubular heating means (1) from the voltage supply.

## Revendications

1. Chauffe-eau instantané pour appareil domestique pour la préparation de café-filtre ou autres boissons infusées chaudes, comprenant un agencement formé par un corps de chauffe tubulaire à chauffage électrique, doté d'une première et d'une seconde bornes de raccordement et deux lignes de raccordements associées, et un tube à eau en couplage thermique, et une sécurité de température également en contact thermique avec cet agencement, ladite sécurité de température étant branchée électriquement entre la première borne de raccordement du corps de chauffe et une ligne de raccordement de l'appareil domestique, et interrompt l'alimentation électrique du corps chauffe lorsqu'elle atteint sa température de coupure T1, et comprenant un régulateur de température qui commande la température de l'agencement de telle manière que la sécurité de température reste au-dessous de sa température de coupure T1, caractérisé en ce qu'il est également branché une seconde sécurité de température (4) entre la seconde borne de raccordement (6) du corps de chauffe tubulaire (1) et la ligne de raccordement correspondante (8), la température de coupure T2 de ladite sécurité (4) étant également située au-dessus de la plage de température commandée par le régulateur de température (2).

2. Chauffe-eau instantané selon la revendication 1, caractérisé en ce que les deux sécurités de température présentent les mêmes températures de coupure T1 et T2, et les mêmes tolérances vis-à-vis de la précision de leur température de coupure.

3. Chauffe-eau instantané selon la revendication 1, caractérisé en ce que la seconde sécurité de température (4) présente vis-à-vis de la précision de sa température de coupure T2 une tolérance plus large, et en ce que sa température de coupure T2 est supérieure à la température de coupure T1 de la première sécurité de température.

4. Chauffe-eau instantané selon la revendication 3, caractérisé en ce que la seconde sécurité de température (4) est réalisée sous la forme d'une sécurité fusible dont le fil de raccordement est soudé entre le régulateur de température (2) et le corps de chauffe tubulaire (1) sous une tension mécanique de telle manière qu'en cas de fusion de l'emplacement de soudure en raison d'une température accrue se produisant au niveau du corps de chauffe (1) le fil de raccordement s'éloigne de l'emplacement de contact et une interruption du circuit électrique est par conséquent assurée.

5. Chauffe-eau instantané selon la revendication 3, caractérisé en ce que la seconde sécurité de température (4) est réalisée sous la forme d'une sécurité fusible, dont le fil de raccordement entre le régulateur de température (2) et le corps de chauffe (1) est réalisé en un alliage à bas point de fusion, par exemple de l'étain à souder, grâce à quoi le fil de liaison fond pour une température correspondante du corps de chauffe (1) et le corps de chauffe est de ce fait isolé de l'alimentation électrique.
